# EUROPÄISCHE PATENTSCHRIFT

(11) **EP 1 130 422 B1**
(45) Veröffentlichungstag und Bekanntmachung des Hinweises auf die Patenterteilung: **21.11.2001**
(21) Anmeldenummer: 00100864.8
(22) Anmeldetag: 18.01.2000
(51) Int. Cl.: G02B 5/18

(54) **Optisches Reflexionsgitter und Verfahren zu seiner Optimierung sowie optisches Spektrometer**
Optical reflection grating, method of optimizing such a grating and optical spectrometer
Réseau à réflexion optique, procédé pour son optimisation et spectromètre optique

(43) Veröffentlichungstag der Anmeldung: 05.09.2001
(73) Patentinhaber: Acterna Eningen GmbH, 72800 Eningen (DE)
(72) Erfinder: Fuhrmann, Thomas, 72800 Eningen (DE)
(74) Vertreter: KOHLER SCHMID + PARTNER

(56) Entgegenhaltungen:
- EP-A- 0 323 238
- BOYD R D ET AL: "HIGH-EFFICIENCY METALLIC DIFFRACTION GRATINGS FOR LASER APPLICATIONS" APPLIED OPTICS,US,OPTICAL SOCIETY OF AMERICA,WASHINGTON, Bd. 34, Nr. 10, 1. April 1995 (1995-04-01), Seiten 1697-1706, XP000498531 ISSN: 0003-6935

## Beschreibung

Die Erfindung betrifft ein optisches Reflexionsgitter mit einer Vielzahl von parallelen Furchen, ein optisches Spektrometer mit einem solchen Reflexionsgitter sowie ein Verfahren zum Auffinden eines optischen Reflexionsgitters mit optimaler Beugungseffizienz für TE- und TM-Wellen einer bestimmten Wellenlänge.

Bekanntlich bestehen optische Reflexionsgitter aus einer ebenen oder gewölbten Trägerplatte, auf die eine periodische Teilung in Form sehr vieler paralleler Gitterfurchen oder -rillen (Linien) aufgebracht ist. Die Oberfläche der Reflexionsgitter ist hochreflektierend. Entsprechend der Form der Gitterfurchen spricht man von Sinusgittern, Rechteckgittern, Sägezahngittern oder Dreieckgittern. Die periodischen Gitterstrukturen sind ähnlich groß wie die Wellenlänge des einfallenden Lichts, so daß Amplitude oder Phase des reflektierten Lichts verändert werden, was zur Beugung des Lichts führt.

Auf ein optisches Reflexionsgitter einfallendes unpolarisiertes Licht läßt sich in zwei zueinander senkrecht polarisierte Anteile zerlegen, deren E-Vektoren senkrecht und parallel zu der durch die Einfalls- und Normalrichtung festgelegten Einfallsebene stehen. Man spricht hier von senkrechter und paralleler Polarisation oder TE-(transversal elektrisch) und TM-(transversal magnetisch) Wellen. Die Beugungseffizienz ist abhängig von der Wellenlänge und für TE-und TM-Wellen sehr unterschiedlich, so daß deren Intensitäten voneinander abweichen. Dies muß bei der Auswertung der Ergebnisse der optischen Spektrumanalyse durch geeignete Maßnahmen, z.B. bauliche optische Maßnahmen, mitberücksichtigt werden.

Es existieren zwar optische Reflexionsgitter, siche z.B. EP-A-323 238 bei denen die beiden Polarisationsrichtungen in einem gewissen Wellenlängenbereich mit hoher Beugungseffizienz vorhanden sind. Diese Reflexionsgitter besitzen im Verhältnis zur Wellenlänge nur eine geringe Liniendichte (bei einer Wellenlänge von 1550 nm ca. 600 Linien/mm, d.h. ein Gitterperiode(g)/Wellenlänge(λ)-Verhältnis von ca. 1,1). Diese bekannten Reflexionsgitter haben den Nachteil, daß sie den einfallenden Wellenlängenbereich nur in einen sehr kleinen Winkelbereich aufspalten und so nachteilig bei der spektralen Auflösung und Genauigkeit sind. Für ein Gitterperiode(g)/Wellenlänge(λ)-Verhältnis von 0,7 ergibt sich eine höhere spektrale Auflösung und Genauigkeit.

Es ist daher die Aufgabe der Erfindung, ein optisches Reflexionsgitter der eingangs genannten Art derart zu verbessern, daß eine möglichst gleiche Beugungseffizienz für TE- und TM-Wellen bei gleichzeitig möglichst hoher Beugungseffizienz erreicht werden kann.

Diese Aufgabe wird bei einem optischen Reflexionsgitter erfindungsgemäß dadurch gelöst, daß bei einem Verhältnis der Gitterperiode zur Wellenlänge von kleiner als 0,9, vorzugsweise kleiner als 0,7, die Furchentiefe so tief gewählt ist, daß die Beugungseffizienzen für TE- und TM-Wellen einer bestimmten Wellenlänge um weniger als 10 %, vorzugsweise um weniger als 5 %, voneinander abweichen und jeweils mindestens 60 % betragen.

Bei solchen erfindungsgemäßen optischen Reflexionsgittern wurde gefunden, daß die Beugungseffizienz für TE- und TM-Wellen nahezu gleich und bei über 60 % liegt. Das heißt, die Beugungseffizienz ist praktisch unabhängig von der Polarisationsrichtung des einfallenden Lichts und sehr hoch.

Das Verhältnis von Furchentiefe zu Gitterperiode ist größer als 0,7, besonders bevorzugt etwa 0,8 bis 2,0.

Das optische Reflexionsgitter ist insbesondere ein Sinusgitter, ein Rechteckgitter, ein Sägezahngitter oder ein Dreieckgitter, aber auch alle andere Gitterformen sind möglich.

Bei einem Sinusgitter wurde gefunden, daß das Verhältnis von Furchentiefe zu Gitterperiode bei etwa 0,9, 1,25, 1,9 oder vorzugsweise bei etwa 1,8 optimal ist. Bei einem Sägezahngitter ist das Verhältnis von Furchentiefe zu Gitterperiode bei etwa 1,25 oder 1,7 optimal, während bei einem Dreieckgitter das Verhältnis von Furchentiefe zu Gitterperiode bei etwa 1,0, 1,25 oder 1,85 optimal ist.

Bei einem einem Rechteckgitter wurde gefunden, daß das optimale Verhältnis von Furchentiefe zu Gitterperiode stark vom Tastverhältnis der Stegbreite zur Gitterperiode abhängt und daß nur bei einem Tastverhältnis unterhalb von 0,35 brauchbare Reflexionsgitter möglich sind.

Bei bevorzugten Ausführungsformen der Erfindung beträgt die Furchentiefe etwa das 0,6- bis 1,4-fache der Wellenlänge des einfallenden Lichts, wobei die Furchentiefe bevorzugt etwa das 0,65-fache, das 0,9-fache, das 1,35-fache oder besonders bevorzugt das 1,25-fache der Wellenlänge des einfallenden Lichts beträgt.

Je nach Anwendungsfall ist ein auf die gewünschte Wellenlänge abgestimmtes optisches Reflexionsgitter zu verwenden. Bei einem Einsatz in der optischen Nachrichtentechnik ist das optische Reflexionsgitter vorzugsweise zur Beugung von Licht mit einer Wellenlänge von etwa 1500 bis 1600 nm, insbesondere von etwa 1550 nm, ausgebildet.

Die Oberfläche des optischen Reflexionsgitters kann plan oder gekrümmt, insbesondere konkav sein.

Die Erfindung betrifft auch ein optisches Spektrometer, insbesondere einen optischen Spektrenanalysator, mit einem optischen Reflexionsgitter, wie es oben beschriebenen ist. Der Vorteil eines solchen Spektrometers besteht darin, daß für das einfallende Licht unabhängig von seiner jeweiligen Polarisationsrichtung eine nahezu gleich hohe Beugungseffizienz erreicht werden kann.

Die Erfindung betrifft schließlich auch ein Verfahren zum Auffinden eines optischen Reflexionsgitters mit nahezu gleich hoher Beugungseffizienz für TE- und TM-Wellen einer bestimmten Wellenlänge bei vorgegebener Gitterperiode und vorgegebener Form der Gitterfurchen. Erfindungsgemäß wird die Furchentiefe solange vergrößert, bis die Beugungseffizienzen für TE- und TM-Wellen um weniger als 10 % voneinander abweichen und jeweils mindestens 60 % betragen.

Allgemein ist noch darauf hinzuweisen, daß bei den oben angegebenen Furchentiefen stets eine Toleranz von +/- 10%, anzusetzen ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: die Beugungseffizienz eines erfindungsgemäßen Sinusgitters als Funktion seiner Furchentiefe für die TE- und die TM-Wellen des einfallenden Lichts;
- Fig. 2: die Beugungseffizienz eines erfindungsgemäßen Sinusgitters mit einer Furchentiefe von 1,95 µm als Funktion der Wellenlänge für die TE- und die TM-Wellen des einfallenden Lichts;
- Fig. 3: die Beugungseffizienz eines erfindungsgemäßen Rechteckgitters mit einer Furchentiefe von 1,05 µm und einem Tastverhältnis von 0,25 als Funktion der Wellenlänge für die TE- und die TM-Wellen des einfallenden Lichts;
- Fig. 4: die Beugungseffizienz eines erfindungsgemäßen Dreieckgitters mit einer Furchentiefe von 2,05 µm als Funktion der Wellenlänge für die TE- und die TM-Wellen des einfallenden Lichts;
- Fig. 5: verschiedene Arten von optischen Reflexionsgittern; und
- Fig. 6: den typischen Aufbau eines optischen Spektrenanalysators mit einem optischen Reflexionsgitter.

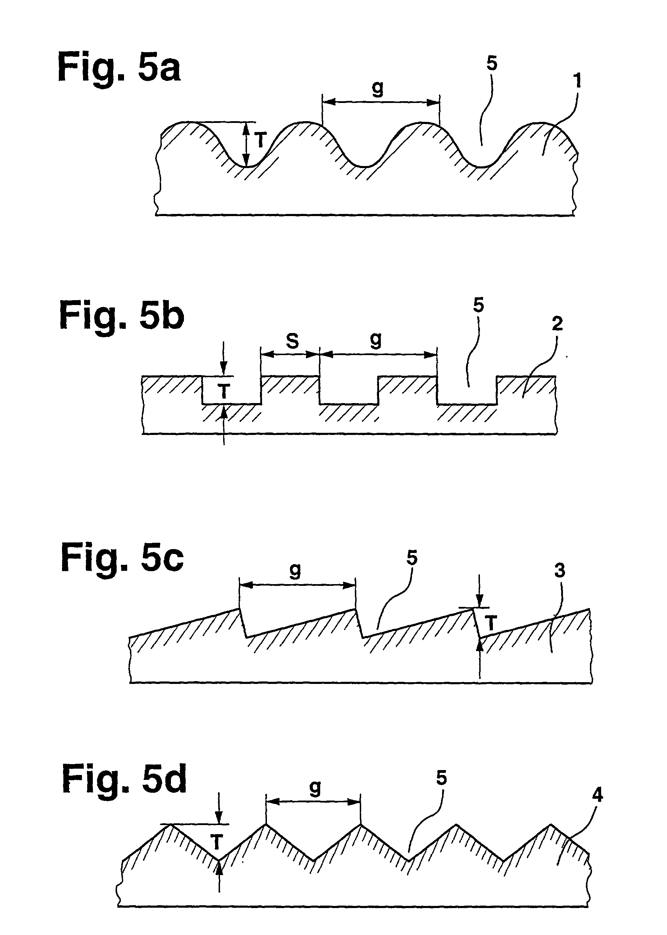

**Fig. 5** zeigt eine Übersicht über verschiedene optische Reflexionsgitter in einer prinzipiellen Darstellung. In **Fig. 5a** ist ein Sinusgitter **1,** in **Fig. 5b** ein Rechteckgitter **2,** in **Fig. 5c** ein Sägezahngitter **3** und **Fig. 5d** ein Dreieckgitter **4** dargestellt. In allen Fign. 5a bis 5d sind die Gitterfurchen mit **5**, die Gitterperiode mit **g** und die Furchentiefen mit **T** bezeichnet. Beim Rechteckgitter 2 ist noch mit **S** die Stegbreite bezeichnet. Die Oberfläche der einzelnen Reflexionsgitter ist mit einer reflektierenden Schicht, beispielsweise Aluminium oder Gold, beschichtet, wie durch die Schraffur angedeutet ist.

Diese optischen Reflexionsgitter werden auf herkömmliche Weise hergestellt, indem mit Diamanten Furchen in ein Glas-substrat niedriger thermischer Ausdehnung oder in einen Film aus Aluminium oder Gold auf Glas geritzt werden. Dieses Original wird zunächst mit einer Schicht nicht haftenden Materials beschichtet, die später wieder vom Original getrennt werden kann. Diesem Schritt folgt eine Bedampfung mit Aluminium. Über diese Schichtkombination folgt nun eine Lackschicht, auf die man die zukünftige Kopie im noch nicht ausgehärteten Zustand legt. Wenn der Kunstharzlack ausgehärtet ist, kann die Kopie vom Original getrennt werden. Selbstverständlich kann das optische Reflexionsgitter auch durch jedes andere bekannte Verfahren hergestellt werden, insbesondere durch ein holographisches Herstellungsverfahren.

Das auf ein optisches Reflexionsgitter einfallende unpolarisierte Licht läßt sich in zwei zueinander senkrecht polarisierte Anteile zerlegen, deren E-Vektoren senkrecht und parallel zu der durch die Einfalls- und Normalrichtung festgelegten Einfallsebene stehen. Man spricht hier von senkrechter und paralleler Polarisation oder TE-(transversal elektrisch) und TM-(transversal magnetisch) Wellen.

Es existieren optische Reflexionsgitter, bei denen die beiden Polarisationsrichtungen in einem gewissen Wellenlängenbereich mit hoher Effizienz vorhanden sind. Diese Reflexionsgitter besitzen im Verhältnis zur Wellenlänge jedoch eine geringe Liniendichte (bei einer Wellenlänge von 1550 nm ca. 600 Linien/mm, also ein Gitterperiode(g)/Wellenlänge(λ)-Verhältnis von ca. 1,1). Diese bekannten Reflexionsgitter haben den Nachteil, daß sie den einfallenden Wellenlängenbereich nur in einen sehr kleinen Winkelbereich aufspalten und so nachteilig bei der spektralen Auflösung und Genauigkeit sind. Für ein Gitterperiode(g)/Wellenlänge(λ)-Verhältnis von 0,7 ergibt sich eine höhere spektrale Auflösung und Genauigkeit. Dieser Wert ist als Kompromiß zwischen vielen Parametern zu sehen und wird auch hier verwendet.

Bei den nachfolgend beschriebenen optischen Reflexionsgittern handelt es sich um die in Fig. 5 gezeigten Gitter mit einer Gitterdichte von 900 Linien pro mm, was einer Gitterperiode von 1,11 µm entspricht. Der Einfallswinkel des Lichts war 55° und der Ausfallswinkel 35°, also eine Winkeldifferenz von 20°. Diese Winkeldifferenz wurde aus mechanischen Gründen gewählt. Im allgemeinen kann diese Winkeldifferenz leicht verändert werden, ohne daß sich an der Beugungseffizienz bzw. optimalen Tiefe viel ändert. Bei den im folgenden verwendeten, im Verhältnis zur Wellenlänge relativ dichten Reflexionsgittern steigt im allgemeinen die Beugungseffizienz, insbesondere bei der TE-Welle, wenn die Winkeldifferenz zwischen ein- und ausfallenden Lichtstrahlen verringert wird (quasi Littrow). Die dazu gehörende Veränderung der optimalen Furchentiefen sollte relativ gering sein.

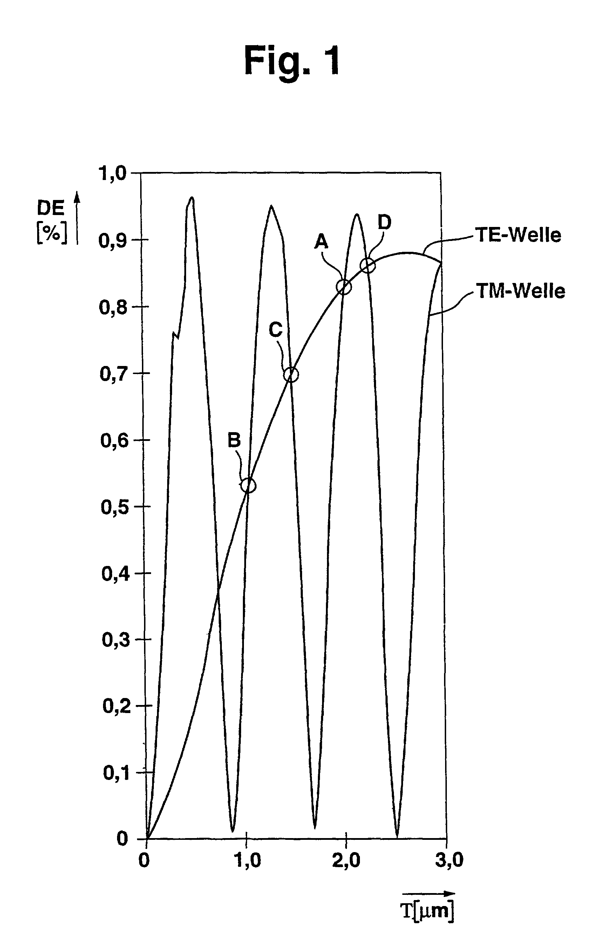

In **Fig. 1** ist die Beugungseffizienz **DE** (in Prozent) eines Sinusgitters 1 als Funktion seiner Furchentiefe T (in µm) für die TE- und die TM-Wellen des einfallenden Lichts (Wellenlänge λ= 1550 nm) dargestellt. Es wurde gefunden, daß die Beugungseffizienz DE für die TE-Welle mit zunehmender Furchentiefe T stetig bis auf etwa 88 % bei einer Furchentiefe von 2,80 µm ansteigt, während sich in diesem Bereich die Beugungseffizienz DE für die TM-Welle periodisch mit zunehmender Furchentiefe T zwischen 2 % und 96 % ändert. In den Schnittpunkten **A, B, C** und **D** der beiden TE und TM-Kurven ist die Beugungseffizienz DE für beide Wellen gleich, d.h. bei Furchentiefen von ca. 1,95 µm, ca. 1,0 µm, ca. 1,4 µm und ca. 2,1 µm. Allgemein entspricht dies einem Furchentiefe(T)/Wellenlängen(λ)-Verhältnis von 1,26, 0,65, 0,9 und 1,35, wobei unter diesen Werten das Verhältnis von 1,26 den optimalen Wert darstellt. In diesen Schnittpunkten A bis D ist die Beugungseffizienz DE für TE- und TM-Wellen gleich hoch, d.h. unabhängig von der Polarisationsrichtung des einfallenden Lichts. Insbesondere im Schnittpunkt A liegt die Beugungseffizienz DE bei über 85 %.

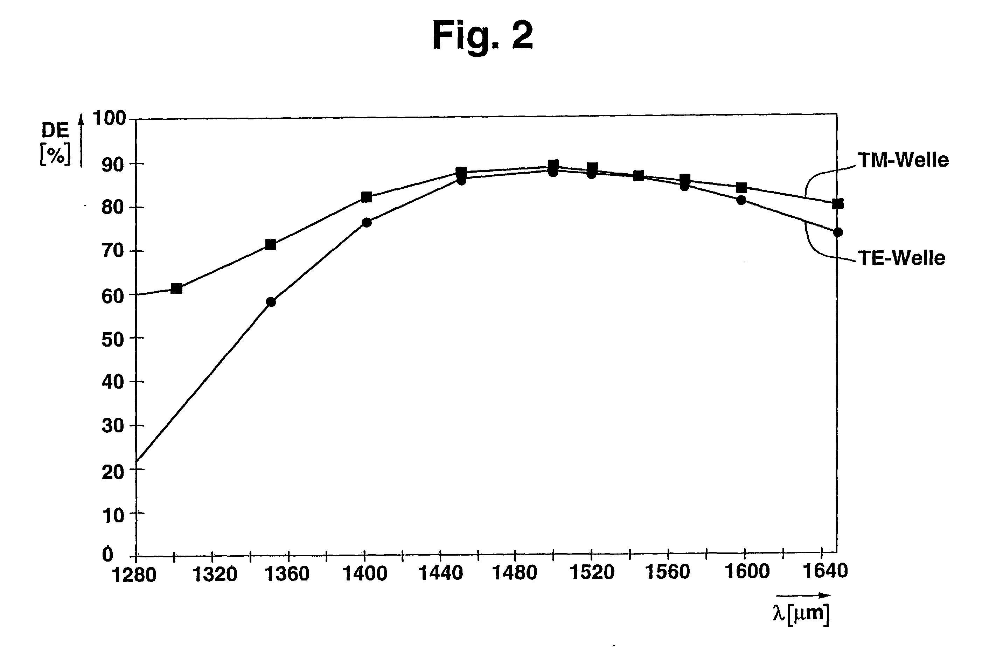

In **Fig. 2** ist die Beugungseffizienz DE eines Sinusgitters 1 mit einer Furchentiefe von 1,95 µm als Funktion der Wellenlänge λ für die TE- und die TM-Wellen des einfallenden Lichts aufgetragen. Es wurde gefunden, daß in einem größeren Wellenlängenbereich von ca. 1420 nm bis ca. 1570 nm die Beugungseffizienz DE für beide Wellen nahezu gleich ist und bei fast 90 % liegt. In diesem Wellenlängenbereich ist die Beugungseffizienz nahezu unabhängig von der Polarisationsrichtung des einfallenden Lichts.

In Tabelle I sind errechnete Werte der Beugungseffizienz DE für unterschiedliche Furchentiefen T bei unterschiedlichen Wellenlängen λ zusammengestellt, und zwar für TE- und TM-Wellen. Aus der Tabelle I ist ersichtlich, daß bei einem Sinusgitter mit einer Furchentiefe zwischen 1,95 µm und 2,1 µm für beide Wellen eine sehr hohe Beugungseffizienz bei minimaler Polarisationsabhängigkeit gefunden wird. Dieser optimale Bereich ist in Tabelle I fett markiert.

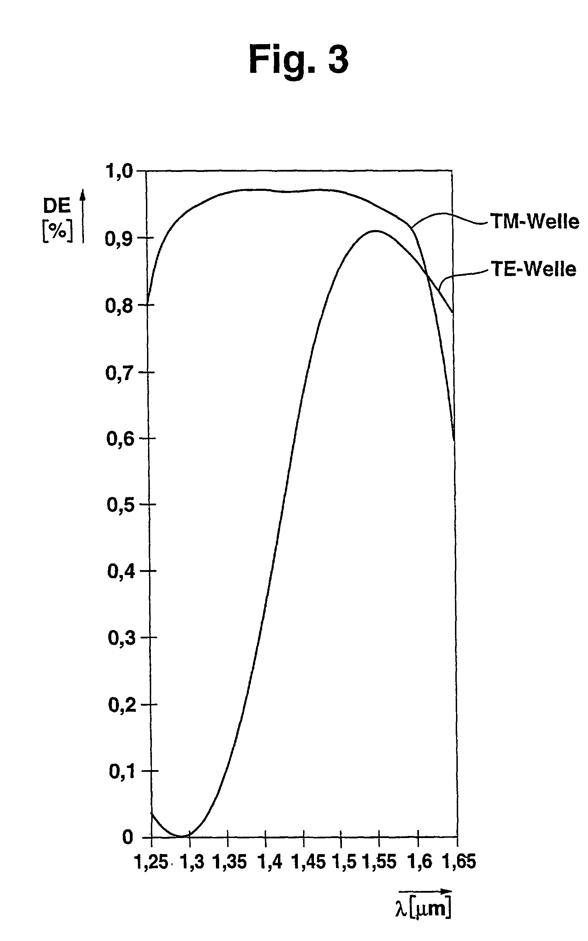

In **Fig. 3** ist die Beugungseffizienz eines erfindungsgemäßen Rechteckgitters 2 mit einer Furchentiefe von 1,05 µm und einem Tastverhältnis von 0,25 für die TE- und die TM-Wellen des einfallenden Lichts aufgetragen (Gitterperiode: 1,11 µm; Einfallswinkel: 55°; Ausfallswinkel 35°). Es wurde gefunden, daß in einem größeren Wellenlängenbereich von ca. 1530 nm bis ca. 1620 nm die Beugungseffizienz DE für beide Wellen nahezu gleich ist und bei über 85 % liegt. In diesem Wellenlängenbereich ist die Beugungseffizienz des erfindungsgemäßen Rechteckgitters 2 nahezu unabhängig von der Polarisationsrichtung des einfallenden Lichts.

Bei Rechteckgittern 4 wurde gefunden, daß das optimale Verhältnis von Furchentiefe T zu Gitterperiode g stark vom Tastverhältnis der Stegbreite S zur Gitterperiode g abhängt und daß nur bei einem Tastverhältnis S unterhalb von 0,35 brauchbare Reflexionsgitter möglich sind. In Tabelle II ist für Rechteckgitter mit unterschiedlichen Tastverhältnissen das jeweils optimale Verhältnis der Furchentiefe T zu Gitterperiode g zusammengestellt.

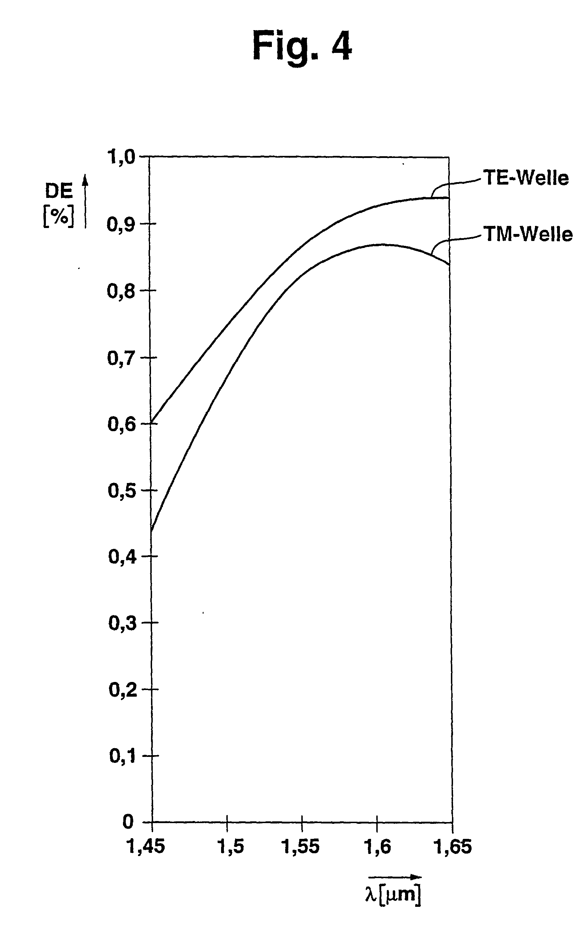

In **Fig. 4** ist die Beugungseffizienz eines erfindungsgemäßen Dreieckgitters 4 mit einer Furchentiefe von 2,05 µm für die TE- und die TM-Wellen des einfallenden Lichts aufgetragen (Gitterperiode: 1,11 µm; Einfallswinkel: 55°; Ausfallswinkel 35°). Es wurde gefunden, daß in einem größeren Wellenlängenbereich von ca. 1550 nm bis ca. 1610 nm die Beugungseffizienz DE für beide Wellen nahezu gleich ist und bei über 85 % liegt. In diesem Wellenlängenbereich ist die Beugungseffizienz des erfindungsgemäßen Dreieckgitters 4 nahezu unabhängig von der Polarisationsrichtung des einfallenden Lichts.

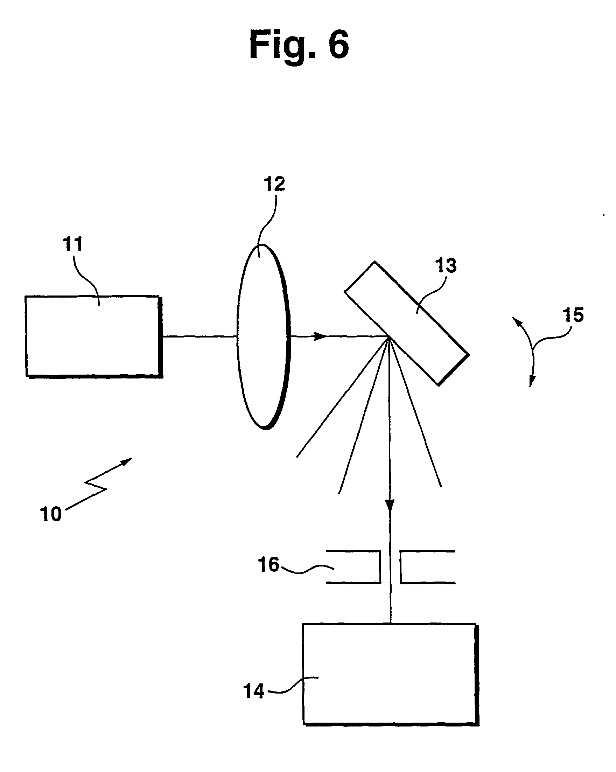

Ein solches in einem bestimmten Wellenlängenbereich polarisationsunabhängiges Reflexionsgitter findet bevorzugt Anwendung in optischen Spektrometern wie z.B. in Spektrenanalysatoren. Der typische Aufbau eines solchen Spektrenanalysators **10** ist in **Fig. 6** gezeigt. Das über einen Eingangsspalt **11** eintretende Licht wird über eine Linse **12** auf ein optisches Reflexionsgitter **13** kollimiert, das die im Licht vorhandenen Wellenlängen unterschiedlich stark beugt. Das durch einen Ausgangsspalt **16** hindurchtretende Licht trifft auf einen Detektor **14** (z.B. eine Photodiode), so daß sich die Lichtintensität bei einer bestimmten Wellenlänge messen läßt. Durch Drehen des Reflexionsgitters 13 in Richtung des Doppelpfeils 15 kann die jeweils gemessene Wellenlänge geändert werden. Mit den oben beschriebenen erfindungsgemäßen Reflexionsgittern läßt sich für das einfallende Licht unabhängig von seiner jeweiligen Polarisationsrichtung eine nahezu gleich hohe Beugungseffizienz erreichen.

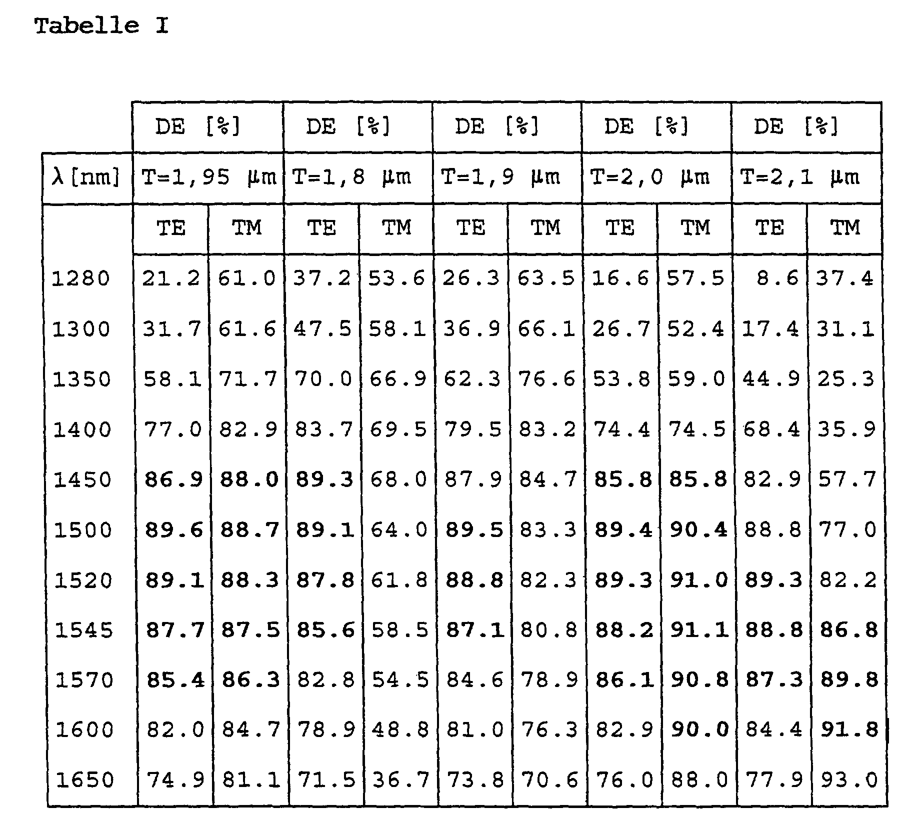

**Tabelle II**

| Tastverhältnis | optimales Verhältnis von T zu g |
|---|---|
| 0.05 | 0.81; 1.5; 1.8 |
| 0.1 | 0.81; 1.5 |
| 0.15 | 0.81 |
| 0.2 | 0.81; 2.2 |
| 0.25 | 0.54 bis 1.3; 2.0 bis 2.4 |
| 0,3 | 0.63; 0.9; 1.6 |
| 0.33 | 1.0; 1.5; 1.7; 2.3; 2.4 |
| 0.35 | 0.81; 1.2; 1.5; 1,8; 2.2; 2.5 |

## Patentansprüche

1. Optisches Reflexionsgitter mit einer Vielzahl von parallelen Furchen (5),
**dadurch gekennzeichnet**,
- daß das Verhältnis von Furchentiefe (T) zu Gitterperiode (g) größer als 0,7 ist, und daß bei einem Verhältnis der Gitterperiode (g) zur Wellenlänge (λ) von kleiner als 0,9, vorzugsweise kleiner als 0,7, die Furchentiefe (T) so tief gewählt ist, daß die Beugungseffizienzen (DE) für TE- und TM-Wellen einer bestimmten Wellenlänge (λ) um weniger als 10 %, vorzugsweise um weniger als 5 %, voneinander abweichen und jeweils mindestens 60 % betragen.

2. Optisches Reflexionsgitter nach Anspruch 1, **dadurch gekennzeichnet, daß** das Verhältnis von Furchentiefe (T) zu Gitterperiode (g) etwa 0,8 bis 2,0 ist.

3. Optisches Reflexionsgitter nach Anspruch 1 oder 2, **dadurch gekennzeichnet, daß** das optische Reflexionsgitter ein Sinusgitter (1), ein Rechteckgitter (2), ein Sägezahngitter (3) oder ein Dreieckgitter (4) ist.

4. Optisches Reflexionsgitter nach Anspruch 3, **dadurch gekennzeichnet, daß** bei einem Sinusgitter (1) das Verhältnis von Furchentiefe (T) zu Gitterperiode (g) etwa 0,9, 1,25, 1,9 oder vorzugsweise etwa 1,8 ist.

5. Optisches Reflexionsgitter nach Anspruch 3, **dadurch gekennzeichnet, daß** bei einem Rechteckgitter (2) das Tastverhältnis von Stegbreite (S) zu Gitterperiode (g) kleiner als etwa 0,35 ist.

6. Optisches Reflexionsgitter nach Anspruch 3, **dadurch gekennzeichnet, daß** bei einem Sägezahngitter (3) das Verhältnis von Furchentiefe (T) zu Gitterperiode (g) etwa 1,25 oder 1,7 ist.

7. Optisches Reflexionsgitter nach Anspruch 3, **dadurch gekennzeichnet, daß** bei einem Dreieckgitter (4) das Verhältnis von Furchentiefe (T) zu Gitterperiode (g) etwa 1,0, 1,25 oder 1,85 ist.

8. Optisches Reflexionsgitter nach einem der vorhergehenden Ansprüche, **dadurch gekennzeichnet, daß** die Furchentiefe (T) etwa das 0,6- bis 1,4-fache der Wellenlänge (λ) des einfallenden Lichts beträgt.

9. Optisches Reflexionsgitter nach Anspruch 8, **dadurch gekennzeichnet, daß** die Furchentiefe (T) etwa das 0,65-fache, das 0,9-fache, das 1,35-fache oder vorzugsweise das 1,25-fache der Wellenlänge (λ) des einfallenden Lichts beträgt.

10. Optisches Reflexionsgitter nach einem der vorhergehenden Ansprüche, **dadurch gekennzeichnet, daß** das optische Reflexionsgitter zur Beugung von Licht mit einer Wellenlänge von etwa 1500 bis 1600 nm, vorzugsweise von etwa 1550 nm, ausgebildet ist.

11. Optisches Reflexionsgitter nach einem der vorhergehenden Ansprüche, **dadurch gekennzeichnet, daß** die Oberfläche des optischen Reflexionsgitters plan ist.

12. Optisches Reflexionsgitter nach einem der Ansprüche 1 bis 10, **dadurch gekennzeichnet, daß** die Oberfläche des optischen Reflexionsgitters gekrümmt ist.

13. Optisches Spektrometer, insbesondere optischer Spektrenanalysator (10), mit einem optischen Reflexionsgitter nach einem der Ansprüche 1 bis 12.

14. Verfahren zum Auffinden eines optischen Reflexionsgitters mit nahezu gleich hoher Beugungseffizienz (DE) für TE- und TM-Wellen einer bestimmten Wellenlänge (λ) bei vorgegebener Gitterperiode (g) und vorgegebener Form der Gitterfurchen (5),
**dadurch gekennzeichnet,**
**daß** bei einem Verhältnis der Gitterperiode (g) zur Wellenlänge (λ) von kleiner als 0,9, vorzugsweise kleiner als 0,7, die Furchentiefe (T) vergrößert wird, bis die Beugungseffizienzen (DE) für TE- und TM-Wellen um weniger als 10 % voneinander abweichen und jeweils mindestens 60 % betragen.

## Claims

1. Optical reflection grating with a multitude of parallel grooves (5), **characterized in that** the ratio of groove depth (T) to grating period (g) is larger than 0.7 and that for a ratio of grating period (g) to wavelength (λ) of smaller than 0.9, preferably of smaller than 0.7, the groove depth (T) is chosen so deep that the diffraction efficiencies (DE) for TE and TM waves of a certain wavelength (λ) differ by less than 10%, preferably by less than 5 % from one another and are at least 60% respectively.

2. Optical reflection grating according to claim 1, **characterized in that** the ratio of groove depth (T) to grating period (g) is about 0.8 to 2.0.

3. Optical reflection grating according to claim 1 or 2, **characterized in that** the optical reflection grating is a sinusoidal grating (1), a rectangular grating (2), a saw-toothed grating (3), or a triangular grating (4).

4. Optical reflection grating according to claim 3, **characterized in that** for a sinusoidal grating (1) the ratio of groove depth (T) to grating period (g) is about 0.9, 1.25, 1.9, or preferably about 1.8.

5. Optical reflection grating according to claim 3, **characterized in that** for a rectangular grating (2) the mark-space-ratio of ridge width (S) to grating period (g) is smaller than about 0.35.

6. Optical reflection grating according to claim 3, **characterized in that** for a saw-toothed grating (3) the ratio of grating depth (T) to grating period (g) is about 1.25 or 1.7.

7. Optical reflection grating according to claim 3, **characterized in that** for a triangular grating (4) the ratio of groove depth (T) to grating period (g) is about 1.0, 1.25, or 1.85.

8. Optical reflection grating according to any of the preceding claims, **characterized in that** the groove depth (T) is about 0.6 to 1.4 times the wavelength (λ) of the incident light.

9. Optical reflection grating according to claim 8, **characterized in that** the groove depth (T) is about 0.65 times, 0.9 times, 1.35 times, or preferably 1.25 times the wavelength (λ) of the incident light.

10. Optical reflection grating according to any of the preceding claims, **characterized in that** the optical reflection grating is designed for the diffraction of light with a wavelength of about 1500 to 1600 nm, preferably of about 1550 nm.

11. Optical reflection grating according to any of the previous claims, **characterized in that** the surface of the optical reflection grating is flat.

12. Optical reflection grating according to any of the claims 1 through 10, **characterized in that** the surface of the optical reflection grating is curved.

13. Optical spectrometer, particularly optical spectrum analyzer (10), with an optical reflection grating according to any of the claims 1 through 12.

14. Method for finding an optical reflection grating with almost equally high diffraction efficiency (DE) for TE and TM waves of a certain wavelength (λ) with given grating period (g) and given shape of the grating grooves (5), **characterized in that** for a ratio of grating period (g) to wavelength (λ) of less than 0.9, preferably less than 0.7, the groove depth (T) is increased until the diffraction efficiencies (DE) for TE and TM waves differ by less than 10% from one another and are at least 60% respectively.

## Revendications

1. Réseau de réflexion optique comportant une multiplicité de sillons parallèles (5),
**caractérisé en ce**
**que** le rapport de la profondeur (T) des sillons au pas (g) du réseau est supérieur à 0,7, et que dans le cas d'un rapport du pas (g) du réseau à la longueur d'onde (λ) d'une valeur inférieure à 0,9, et de préférence inférieure à 0,7, la profondeur (T) des sillons est choisie suffisamment grande pour que les efficacités de diffraction (DE) pour les ondes TE et TM ayant une certaine longueur d'onde (λ) diffèrent entre elles de moins de 10 %, de préférence de moins de 5 % et respectivement soient égales au moins chacune à 60 %.

2. Réseau de réflexion optique selon la revendication 1, **caractérisé en ce que** le rapport de la profondeur (T) des sillons au pas (g) du réseau est compris entre environ 0,8 et 2,0.

3. Réseau de réflexion optique selon la revendication 1 ou 2, **caractérisé en ce que** le réseau de réflexion optique est un réseau d'allure sinusoïdale (1), un réseau d'allure rectangulaire (2), un réseau en dents de scie (3) ou un réseau à forme triangulaire (4).

4. Réseau de réflexion optique selon la revendication 3, **caractérisé en ce que** dans le cas d'un réseau de forme sinusoïdale (1), le rapport de la profondeur (T) des sillons au pas (g) du réseau est égal à environ 0,9, 1,25, 1,9 ou de préférence à environ 1,8.

5. Réseau de réflexion optique selon la revendication 3, **caractérisé en ce que**, dans le cas d'un réseau ayant une forme rectangulaire (2), le rapport de la largeur de barrette (S) au pas (g) du réseau est inférieur à environ 0,35.

6. Réseau de réflexion optique selon la revendication 3, **caractérisé en ce que** dans le cas d'un réseau en dents de scie (3), le rapport de la profondeur (T) des sillons au pas (g) du réseau est égal approximativement à 1,25 ou à 1,7.

7. Réseau de réflexion optique selon la revendication 3, **caractérisé en ce que** dans le cas d'un réseau de forme triangulaire (15), le rapport de la profondeur () des sillons au pas (g) du réseau est égal à environ 1,0, 1,25 ou 1,85.

8. Réseau de réflexion optique selon l'une des revendications précédentes, **caractérisé en ce que** la profondeur (T) des sillons est comprise entre environ 0,6 et 1,4 fois la longueur d'onde (λ) de la lumière incidente.

9. Réseau de réflexion optique selon la revendication 8, **caractérisé en ce que** la profondeur (T) des sillons est égale approximativement à 0,65 fois, 0,9 fois, 1,35 fois ou de préférence 1,25 fois la longueur d'onde (λ) de la lumière incidente .

10. Réseau de réflexion optique selon l'une des revendications précédentes, **caractérisé en ce que** le réseau de réflexion optique est agencé pour diffracter la lumière ayant une longueur d'onde comprise entre environ 1500 à 1600 nm et de préférence égale à environ 1550 nm.

11. Réseau de réflexion optique selon l'une des revendications précédentes, **caractérisé en ce que** la surface du réseau de réflexion optique est plane.

12. Réseau de réflexion optique selon l'une des revendications 1 à 10, **caractérisé en ce que** la surface du réseau de réflexion optique est cintrée.

13. Spectromètre optique, notamment analyseur de spectre optique (10), comportant un réseau de réflexion optique selon l'une des revendications 1 à 12.

14. Procédé pour déterminer un réseau de réflexion optique possédant approximativement la même efficacité de diffraction (DE) pour les ondes TE et TM ayant une certaine longueur d'onde (λ) pour un pas prédéterminé (g) du réseau et une forme prédéterminée des sillons (5) du réseau,
**caractérisé en ce**
**que** pour un rapport du pas (g) du réseau à la longueur d'onde (λ) inférieur à 0,9 et de préférence inférieur à 0,7, on augmente la profondeur (T) des sillons jusqu'à ce que les efficacités de diffraction (DE) pour les ondes TE et TM diffèrent entre elles de moins de 10 % et soient égales chacun au moins à 60 %.
